# FASCICULE DE BREVET EUROPEEN

(11) **EP 1 061 290 B1**
(45) Date de publication et mention de la délivrance du brevet: **21.05.2003**
(21) Numéro de dépôt: 00401732.3
(22) Date de dépôt: 16.06.2000
(51) Int. Cl.: F16H 59/04

(54) **Dispositif de commande sans contact, notamment pour la commande de boîte de vitesse automatisée.**
Berührungslose Schaltungsvorrichtung, insbesondere zum Schalten eines automatisierten Getriebes
Contactless control device, particularly for the control of an automated gearbox

(30) Priorité: 17.06.1999 FR 9907671
(43) Date de publication de la demande: 20.12.2000
(73) Titulaire: SC2N, 78180 Montigny-le-Bretonneux (FR)
(72) Inventeur: Gauthier, Christian, 92200Neuilly sur Seine (FR)
(74) Mandataire: Texier, Christian

(56) Documents cités:
- EP-A- 0 620 385
- EP-A- 0 794 362
- EP-A- 1 013 972
- WO-A-99/11951
- DE-A- 3 606 390
- DE-A- 19 637 001

## Description

La présente invention concerne le domaine des dispositifs de commande sans contact mécanique.

La présente invention peut trouver notamment application dans la commande de boîtes de vitesses automatisées (c'est-à-dire de boîtes de vitesses pilotées par des actionneurs) à partir d'un levier.

On trouvera des exemples de dispositifs de commande pour boîte de vitesse automatisée dans le document EP-A-0620385, qui comporte les caractéristiques du préambule de la revendication 1.

La présente invention peut également trouver application dans le domaine des commutateurs électriques pour véhicules automobiles.

La présente invention a maintenant pour but de proposer de nouveaux moyens de commande perfectionnés par rapport à l'état de la technique connu.

Ce but est atteint dans le cadre de la présente invention grâce à un dispositif comprenant deux ensembles susceptibles de déplacement relatif : l'un comprenant une grille de transducteurs orientés selon des axes prédéterminés, et l'autre comprenant des éléments de commande aptes à modifier l'état des transducteurs selon qu'ils recouvrent ou non ces derniers, lesdits éléments de commande étant disposés selon une grille orientée selon des axes prédéterminés parallèles à ceux de la grille de transducteurs, mais avec un pas supérieur à celui des transducteurs, de sorte que chaque élément de commande puisse alternativement recouvrir un transducteur ou plusieurs transducteurs selon la position relative définie entre les deux ensembles.

Selon une autre caractéristique de l'invention, la grille des éléments de commande est définie de telle sorte que chaque élément de commande puisse sélectivement recouvrir tous les transducteurs.

Selon une autre caractéristique avantageuse de l'invention, le dispositif comprend quatre transducteurs et quatre éléments de commande sélectifs, disposés chacun selon une grille à deux lignes et deux colonnes parallèles entre elles d'un ensemble à l'autre.

D'autres caractéristiques, buts et avantages de la présente invention apparaîtront à la lecture de la description détaillée qui va suivre et en regard des dessins annexés, donnés à titre d'exemple non limitatif et sur lesquels :
- la figure 1 représente schématiquement un agencement de grille de transducteurs et un agencement de grille d'éléments de commande conforme à la présente invention, en position superposée,
- la figure 2 illustré schématiquement une grille de position relative susceptible d'être définie entre les deux ensembles de transducteurs et d'éléments de commande,
- la figure 3 représente lesdits ensembles de transducteurs et d'éléments de commande dans ces diverses positions relatives, et
- la figure 4 représente la table de vérité de l'état des transducteurs, dans ces diverses positions.

Selon le mode de réalisation préférentiel mais non limitatif représenté sur les figures annexées, le dispositif conforme à la présente invention comprend quatre sondes à effet Hall S1, S2, S3 et S4 disposées sur un support commun 10 et un aimant 20 à quatre pôles A, B, C et D, par exemple formé d'une plastoferrite.

Les quatre sondes S1, S2, S3 et S4 sont disposées selon deux lignes et deux colonnes, soit selon les sommets d'un carré dont les côtés ont une longueur égale à la distance séparant chaque paire de transducteur S1 à S4 deux à deux, avec des diagonales identiques.

De même, les quatre pôles A, B, C et D de l'aimant 20 sont formés de deux pôles Nord et deux pôles Sud alternés selon deux lignes et deux colonnes, soit selon les angles d'un carré.

De manière arbitraire, on peut considérer que sur les figures annexées, les zones blanches A et C de l'aimant 20 correspondent à des pôles Nord vers les transducteurs S1 à S4, tandis que les zones grises B et D de l'aimant 20 correspondent à des pôles Sud dirigés vers les transducteurs S1 à S4.

Les axes de l'agencement des pôles A, B, C, D de l'aimant 20 sont respectivement parallèles aux axes de l'agencement des sondes S1 à S4.

Cependant, les dimensions des pôles A, B, C et D sont supérieures à celles des transducteurs S1 à S4 (en d'autres termes, la distance séparant le centre de deux pôles adjacents, AB par exemple, de l'aimant, est supérieure à la distance séparant le centre de deux transducteurs adjacents, S1 et S2 par exemple). Ainsi chaque pôle A, B, C, D de l'aimant 20 est adapté pour recouvrir soit une sonde S1 à S4 unique, soit deux sondes S1 à S4 adjacentes, soit encore les quatre sondes S1 à S4 selon la position relative imposée entre les deux ensembles 10 et 20.

Le déplacement relatif entre les deux ensembles 10 et 20 est piloté par des moyens de guidage, indexage et entraînement classique, tels que définis par exemple dans le document EP-A-0620385.

L'invention n'est cependant pas limitée à ce type particulier de moyens de guidage, d'indexage et d'entraînement.

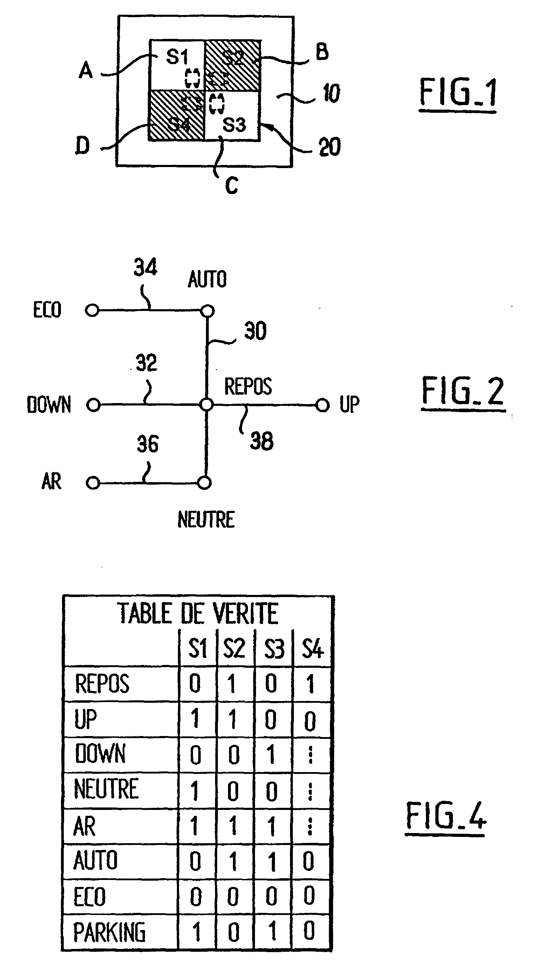

On a illustré sur la figure 2, une grille particulière et non limitative de commande de position relative entre les deux ensembles 10 et 20.

La grille de commande illustrée sur la figure 2 a la forme générale d'un E comprenant un tronc principal 30 muni d'un brin central 32 orthogonal et deux brins auxiliaires latéraux 34, 36 parallèles au brin central 32 et orthogonal au tronc principal 30, assorti en outre d'un tronçon auxiliaire 38 prolongeant le brin central 32 du E, sur le côté opposé du tronc principal 30.

A titre d'exemple non limitatif, le point central de la grille correspondant au point d'intersection du tronc principal 30 et du brin central 32 et du tronçon auxiliaire 38 peut correspondre à une position de repos, les extrémités du brin central 32 et du tronçon auxiliaire 38 correspondant respectivement à des positions de commande de descente de rapport et de montée de rapport pour une boîte de vitesse automatisée, les extrémités du tronc principal 30 correspondant respectivement à une position neutre à une position automatique et les positions correspondant aux extrémités des brins latéraux 34 et 36 associés l'un à la position auto, l'autre à la position neutre, correspondant respectivement à une position économique et à une position marche arrière.

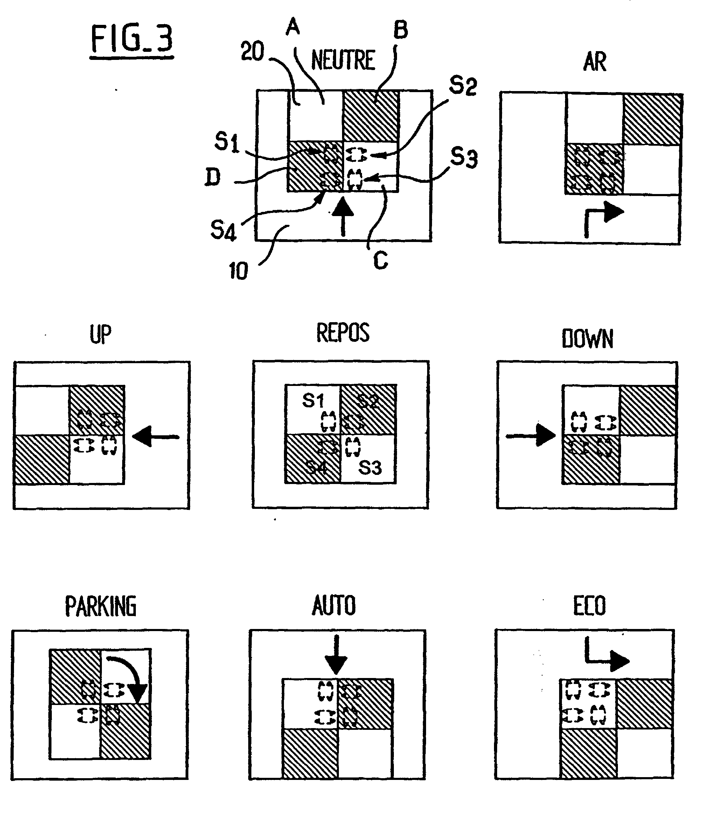

Comme on le voit sur la figure 3, en position de repos un pôle A, B, C, D, est superposé respectivement à une sonde S1, S2, S3, S4.

En position neutre, le pôle D est superposé aux sondes S1 et S4, tandis que le pôle C est superposé aux sondes S2 et S3.

En position auto, le pôle A est superposé aux sondes S1 et S4, tandis que le pôle B est superposé aux sondes S2 et S3.

Dans la position "up" ou montée de vitesse, le pôle B est superposé aux sondes S1 et S2, tandis que le pôle C est superposé aux sondes S3 et S4.

En position "down" ou descente de vitesse, le pôle A est superposé aux sondes S1 et S2 tandis que le pôle D est superposé aux sondes S3 et S4.

En position marche arrière, le pôle D est superposé aux quatre sondes S1, S2, S3 et S4.

En position éco, le pôle A est superposé aux quatre sondes S1, S2, S3 et S4.

On notera que dans les grilles précédemment indiquées de position relative entre les deux ensembles 10, 20, notamment en regard de la figure 2, les moyens de guidage, indexage et entraînement des deux ensembles 10, 20 imposent un déplacement relatif entre ceux-ci selon des tronçons rectilignes, perpendiculaires entre eux et respectivement parallèles aux axes des grilles de transducteurs S1 à S4 et éléments de commande A à D.

On notera par ailleurs, que comme illustré sur la figure 1, par rotation de 90° à partir de la position de repos, entre les deux ensembles 10, 20, on peut conduire à une position de commande additionnelle, par exemple de parking dans laquelle chaque pôle A, B, C, D est superposée à une sonde S1, S2, S3 et S4, la sonde sous-jacente étant cependant différente de celle définie en position de repos.

Bien entendu la présente invention n'est pas limitée au mode de réalisation particulier qui vient d'être décrit, mais s'étend à toutes variantes conformes à son esprit.

En particulier, les transducteurs à base de sonde à effet Hall pilotés par des pôles d'aimant pourront être remplacés par des moyens optiques, émetteur/récepteur, pilotés par un réflecteur.

Dans ce cas, chaque paire de pôles A et C ou B et D est remplacé par un réflecteur, tandis que chaque sonde S1, S2, S3, S4 est formée par une paire émetteur/récepteur optiques associée. Dans ce cas, le récepteur reçoit un flux lumineux réfléchi en provenance de l'émetteur associé, lorsqu'il se trouve sous-jacent à un réflecteur.

Bien entendu, l'homme de l'art comprendra que la grille de commande illustrée sur la figure 2 peut être simplifiée, par exemple limitée à une grille en h limitée aux brins 32, 36, 38 et le tronçon du tronc 30 disposé entre les positions repos et neutre.

Dans le cadre de l'invention, les moyens de guidage, indexage et entraînement sont typiquement adaptés pour définir, soit cinq positions relatives entre les deux ensembles 10, 20, selon une grille de commande en h, soit une grille de commande de position relative entre les deux ensembles 10, 20, comprenant sept positions disposées selon une grille en E assortie d'un tronçon auxiliaire prolongeant le brin central du E.

## Revendications

1. Dispositif de commande sans contact mécanique, notamment pour la commande d'une boîte de vitesse automatisée de véhicule automobile, comprenant deux ensembles (10, 20) susceptibles de déplacement relatif : l'un (10) comprenant une grille de transducteurs (S1, S2, S3, S4) orientés selon des axes prédéterminés, et l'autre (20) comprenant des éléments de commande (A, B, C, D) aptes à modifier l'état des transducteurs (S1, S2, S3, S4) selon qu'ils recouvrent ou non ces derniers, lesdits éléments de commande (A, B, C, D) étant disposés selon une grille orientée selon des axes prédéterminés parallèles à ceux de la grille de transducteurs (S1, S2, S3, S4) **caractérisé par le fait que** les éléments de commande ont un pas supérieur à celui des transducteurs (S1, S2, S3, S4) de sorte que chaque élément de commande (A, B, C, D) puisse alternativement recouvrir un transducteur (S1, S2, S3, S4) ou plusieurs transducteurs selon la position relative définie entre les deux ensembles.

2. Dispositif selon la revendication 1, **caractérisé par le fait que** la grille des éléments de commande (A, B, C, D) est adaptée de telle sorte que chaque élément de commande puisse sélectivement recouvrir tous les transducteurs (S1, S2, S3, S4).

3. Dispositif selon l'une des revendications 1 ou 2, **caractérisé par le fait qu'**il comprend quatre transducteurs (S1, S2, S3, S4) et quatre éléments de commande sélectifs (A, B, C, D) disposés chacun selon un agencement de deux lignes et deux colonnes respectivement parallèles entre elles.

4. Dispositif selon l'une des revendications 1 à 3, **caractérisé par le fait qu'**il comprend en outre des moyens de guidage, indexage et entraînement aptes à définir cinq positions relatives entre les deux ensembles selon une grille de commande en h.

5. Dispositif selon l'une des revendications 1 à 3, **caractérisé par le fait qu'**il comprend en outre des moyens de guidage, indexage et entraînement aptes à déterminer une grille de commande de position relative entre les deux ensembles (10, 20) comprenant sept positions disposées selon une grille en E assortie d'un tronçon auxiliaire prolongeant le brin central du E.

6. Dispositif selon l'une des revendications 1 à 5, **caractérisé par le fait qu'**il comprend des moyens de guidage, indexage et entraînement aptes à assurer un déplacement relatif entre les deux ensembles (10, 20) selon des axes parallèles à ceux des grilles de transducteurs (S1, S2, S3, S4) et éléments de commande (A, B, C, D).

7. Dispositif selon l'une des revendications 1 à 6, **caractérisé par le fait qu'**il comprend des moyens de guidage, indexage et entraînement aptes à assurer en outre une rotation relative entre les deux ensembles (10, 20).

8. Dispositif selon l'une des revendications 1 à 7, **caractérisé par le fait que** les transducteurs (S1, S2, S3, S4) sont formés de sondes à effet hall tandis que les éléments de commande (A, B, C, D) sont formés de pôles d'aimant;

9. Dispositif selon la revendication 8, **caractérisé par le fait que** les pôles d'aimant (A, B, C, D) sont formés d'une plastoferrite.

10. Dispositif selon l'une des revendications 1 à 7, **caractérisé par le fait que** les transducteurs sont formés de couples émetteur/récepteur optiques tandis que les éléments de commande sont formés alternativement de réflecteurs.

## Claims

1. A control device without mechanical contact, in particular for controlling a semi-automatic gear box for a motor vehicle, the device comprising two assemblies (10, 20) capable of relative displacement: one of the assemblies (10) comprising a grid of transducers (S1, S2, S3, S4) oriented on predetermined axes, and the other assembly (20) comprising control elements (A, B, C, D) adapted to modify the states of the transducers (S1, S2, S3, S4) depending on whether or not they overlap them, said control elements (A, B, C, D) being disposed in a grid oriented along two predetermined axes parallel to those of the grid of transducers (S1, S2, S3, S4), the device being **characterized by** the fact that the control elements are at a pitch which is greater than that of the transducers (S1, S2, S3, S4) such that each control element (A, B, C, D) can cover either a single transducer (S1, S2, S3, S4) or a plurality of transducers, depending on the relative position defined between the two assemblies.

2. A device according to claim 1, **characterized by** the fact that the grid of control elements (A, B, C, D) is adapted so that each control element can selectively cover all of the transducers (S1, S2, S3, S4).

3. A device according to claim 1 or claim 2, **characterized by** the fact that it has four transducers (S1, S2, S3, S4) and four selective control elements (A, B, C, D) each disposed in an arrangement of two rows by two columns that are respectively parallel to one another.

4. A device according to any one of claims 1 to 3, **characterized by** the fact that it further comprises guide, indexing, and drive means suitable for defining five relative positions between the two sets in accordance with an h-shaped control grid.

5. A device according to any one of claims 1 to 3, **characterized by** the fact that it further comprises guide, indexing, and drive means suitable for determining a control grid for relative positions between the two assemblies (10, 20) comprising seven positions disposed in an E-shaped grid associated with an auxiliary segment extending the central branch of the E-shape.

6. A device according to any one of claims 1 to 5, **characterized by** the fact that it comprises guide, indexing, and drive means suitable for ensuring relative displacement between the two assemblies (10, 20) along axes parallel to those of the grids of transducers (S1, S2, S3, S4) and of control elements (A, B, C, D).

7. A device according to any one of claims 1 to 6, **characterized by** the fact that it comprises guide, indexing, and drive means suitable for also enabling the two assemblies (10, 20) to turn relative to each other.

8. A device according to any one of claims 1 to 7, **characterized by** the fact that the transducers (S1, S2, S3, S4) are formed by Hall effect sensors while the control elements (A, B, C, D) are formed by magnet poles.

9. A device according to claim 8, **characterized by** the fact that the magnet poles (A, B, C, D) are made of plastoferrite.

10. A device according to any one of claims 1 to 7, **characterized by** the fact that the transducers are formed by pairs of light emitters and light receivers, while the control elements are formed alternatively by reflectors.

## Patentansprüche

1. Berührungslose Schaltvorrichtung, insbesondere zum Schalten eines automatisierten Getriebes eines Kraftfahrzeugs, mit zwei Einheiten (10, 20), die für eine Verschiebung relativ zueinander geeignet sind, wobei die eine (10) ein Gitter aus Transducern (S1, S2, S3, S4) umfaßt, die entlang vorbestimmter Achsen ausgerichtet sind, und wobei die andere (20) Steuerelemente (A, B, C, D) umfaßt, die in der Lage sind, den Zustand der Transducer (S1, S2, S3, S4) danach, ob sie letztere bedecken oder nicht, zu modifizieren, wobei die Steuerelemente (A, B, C, D) entsprechend einem Gitter angeordnet sind, das entlang vorbestimmter und zu denen des Gitters der Transducer (S1, S2, S3, S4) parallelen Achsen ausgerichtet ist, **dadurch gekennzeichnet, daß** die Steuerelemente eine Gitterlänge haben, die größer ist als diejenige der Transducer (S1, S2, S3, S4) und zwar derart, daß jedes Steuerelement (A, B, C, D) gemäß der zwischen den beiden Einheiten definierten relativen Position alternativ einen Transducer (S1, S2, S3, S4) oder mehrere Transducer bedecken kann.

2. Vorrichtung nach Anspruch 1, **dadurch gekennzeichnet, daß** das Gitter der Steuerelemente (A, B, C, D) derart ausgebildet ist, daß jedes Steuerelement selektiv alle Transducer (S1, S2, S3, S4) bedecken kann.

3. Vorrichtung nach einem der Ansprüche 1 oder 2, **dadurch gekennzeichnet, daß** sie vier Transducer (S1, S2, S3, S4) und vier selektive Steuerelemente (A, B, C, D) umfaßt, von denen jeder oder jedes gemäß einer Anordnung von zwei Zeilen und zwei Spalten, die jeweils zueinander parallel sind, angeordnet ist.

4. Vorrichtung nach einem der Ansprüche 1 bis 3, **dadurch gekennzeichnet, daß** sie außerdem Führungsmittel, Einrastmittel und Antriebsmittel umfaßt, die geeignet sind, fünf Relativpositionen zwischen den zwei Einheiten gemäß eines h-Gitters zum Steuern zu definieren.

5. Vorrichtung nach einem der Ansprüche 1 bis 3, **dadurch gekennzeichnet, daß** sie außerdem Führungsmittel, Einrast mittel und Antriebsmittel umfaßt, die geeignet sind, ein Gitter zum Steuern der Relativposition zwischen den zwei Einheiten (10, 20) mit sieben Positionen zu bestimmen, die gemäß einem E-Gitter angeordnet sind, das aus einer Hilfsstrecke zusammengestellt ist, die den zentralen Ast des E verlängert.

6. Vorrichtung nach einem der Ansprüche 1 bis 5, **dadurch gekennzeichnet, daß** sie Führungsmittel, Einrastmittel und Antriebsmittel umfaßt, die geeignet sind, eine relative Verschiebung zwischen den zwei Einheiten (10, 20) entlang der Achsen sicherzustellen, die parallel zu denen der Gitter der Transducer (S1, S2, S3, S4) und der Steuerelemente (A, B, C, D) sind.

7. Vorrichtung nach einem der Ansprüche 1 bis 6, **dadurch gekennzeichnet, daß** sie Führungsmittel, Einrastmittel und Antriebsmittel umfaßt, die geeignet sind, außerdem eine relative Rotation zwischen den zwei Einheiten (10, 20) sicherzustellen.

8. Vorrichtung nach einem der Ansprüche 1 bis 7, **dadurch gekennzeichnet, daß** die Transducer (S1, S2, S3, S4) aus Hallsonden gebildet sind, während die Steuerelemente (A, B, C, D) aus Magnetpolen gebildet sind.

9. Vorrichtung nach Anspruch 8, **dadurch gekennzeichnet, daß** die Magnetpole (A, B, C, D) aus einem Plastoferrit gebildet sind.

10. Vorrichtung nach einem der Ansprüche 1 bis 7, **dadurch gekennzeichnet, daß** die Transducer aus optischen Sender-/Empfängerpaaren gebildet sind, während die Steuerelemente alternativ aus Reflektoren gebildet sind.
